# EUROPEAN PATENT SPECIFICATION

(11) **EP 3 456 493 B1**
(45) Date of publication and mention of the grant of the patent: **25.09.2019**
(21) Application number: 18713345.9
(22) Date of filing: 15.02.2018
(51) Int. Cl.: B26D 7/06, A22C 25/18, B23D 55/00

(54) **FOOD SLICER WITH IMPROVED SAFETY**
SCHNEIDVORRICHTUNG FÜR LEBENSMITTEL MIT VERBESSERTEN SICHERHEIT
DISPOSITIF POUR DÉCOUPER DES ALLIMENTS AVEC SÉCURITÉ AMELIORÉE

(30) Priority: 23.03.2017 PT 2017109989
(43) Date of publication of application: 20.03.2019
(73) Proprietor: Sersounox - Equipamentos Para Indústria Alimentar, Lda, 2590-418 Sobral De Monte Agraço (PT)
(72) Inventor: CARVALHO DE SOUSA, José António, 2590-418 Sobral De Monte Agraço (PT)
(74) Representative: do Nascimento Gomes, Rui
(86) International application number: PCT/IB2018/050923
(87) International publication number: WO 2018/172864

(56) References cited:
- EP-A2- 0 395 437
- CA-A1- 2 255 553
- GB-A- 523 927
- JP-A- H0 639 784

## Description

### FIELD OF THE INVENTION

This invention falls within the scope of cutters for whole pieces of food, such as a piece of meat, a fish or a piece of fish, or a piece of a meat, fish or vegetable derivative.

This invention is specifically related to cutters typically comprising cutting means, a movable structure which is suitable for positioning the whole piece of food, and a stopper which is arranged in such a way as to support the whole piece of food when positioned in the said movable structure.

### BACKGROUND OF THE INVENTION

The present invention finds a closer background in sawing machines for frozen fish, typically having a structure in which a band saw is positioned vertically in the centre of a horizontal metal surface, passing through it, and an operator using his hands to make a food piece like a frozen fish to pass through the saw. In these models, typically the only barrier between the operator's hands and the saw is a small guard bar, which covers the saw on a surface directed to the position in which the operator typically stands, and which is hinged with a frame supporting the saw, such that the operator is able to move the piece of food along the band saw, cutting it to the desired portion.

This type of saw not only does not provide the operator with full safety, but it also does not implement an automatic or semi-automatic mechanism that is reliable, cutting out exactly the desired portion of the piece of food and making its operation easier, nor does it prevent the operator from being required to handle the whole piece of food to be cut in the vicinity of the cutting means. A safe and reliable solution has thus been developed for cutting food pieces, such as fresh or frozen fish, meat, or fish, meat or vegetable derivatives. The present invention thus solves these problems in a simplified, constructive and highly effective manner.

The patent application with publication number GB 523 927 A discloses a slicing machine with a tunnel-like substance holder which is provided in an oblique plane. Such machine provides slicing (solely) by moving its cutting means along a first movement lined. Thereby, the solution therein disclosed does not provide a high-quality cut of the product while providing ease of use and safety to its operator, as the object of the present invention does. This document discloses a cutter for a whole piece of food comprising cutting means, a reciprocating carriage suitable for positioning the whole piece of food and a portion of the carriage which plane is parallel to the blade arranged in such a way as to support the whole piece of food when positioned on said movable structure wherein the movable structure comprises a confining area which is suitable for securing the whole piece of food with a base, an opening through which a section of the whole piece of food, when positioned in the said base, is exposed to the said cutting means and confining means of the whole piece of food, being configured to move in a reciprocating way along a cutting plane arranged obliquely to the gravitational axis; the a movement line includes a point at which the movable structure is adjacent to the cutting means; a stopper is spaced apart by a predefined portion of the said cutting means and arranged substantially perpendicular to the cutting plane and along the movement line to the cutting means,such that when the whole piece of food is positioned in the confining area of the movable structure through the said opening, it abuts against the stopper; the cutting means is arranged substantially perpendicular to the said cutting plane, intersecting it, and in such a way that when the whole piece of food is positioned in the said base of the movable structure against the stopper and the movable structure is moved along the first movement line, the whole piece of food is cut to the extent of the said pre-set portion.

### SUMMARY OF THE INVENTION

It is thus an object of the present invention a cutter (1) for a whole piece of food comprising cutting means (5), a movable structure (2) suitable for positioning the whole piece of food and a stopper (4) arranged in such a way as to support the whole piece of food when positioned on said movable structure (2) wherein:
- the movable structure (2) comprises a confining area which is suitable for securing the whole piece of food with:
   i. a base,
   ii. an opening (6) through which a section of the whole piece of food, when positioned in the said base, is exposed to the said cutting means (5) and
   iii. confining means (3) of the whole piece of food,
   being configured to move along a cutting plane arranged obliquely to the gravitational axis and consisting of a closed circuit including:
   i. a first movement line including a point at which the movable structure (2) is adjacent to the cutting means (5) and
   ii. a second movement line including a point at which the movable structure (2) is at a pre-set distance further from the cutting means (5),
- the stopper (4) being:
   i. spaced apart by a pre-set portion of the said cutting means (5) and
   ii. arranged substantially perpendicular to the cutting plane and along the movement line to the cutting means (5),
   such that when the whole piece of food is positioned in the confining area of the movable structure (2) through said opening (6), it abuts against the stopper (4);
- the cutting means (5) being arranged:
   i. substantially perpendicular to the said cutting plane, intersecting it, and
   ii. in such a way that when the whole piece of food is positioned in the said base of the movable structure (2) against the stopper (4) and the movable structure (2) is moved along the first movement line, the whole piece of food is cut to the extent of the said pre-set portion.

The present invention thus enables to semi-automatically or automatically cut a whole piece of food, such as a piece of meat, with greater ease and safety for an operator, while avoiding that after cutting the piece - in the return movement to an initial position for re-cutting - the piece of food passes again next to the cutting means (5), which might lead to part of the cut piece breaking apart when encountering the cutting means (5). As a consequence, movement in a circuit comprising a position which is closer to the cutting means (5) (and to the stopper (4)) - where the cut occurs - and a position further away from the cutting means (5) (and from the stopper (4)) - wherein the movable structure (2) returns to an initial position for a new cut - causes this drawback not to occur, which would deteriorate the quality of the whole piece of food to be cut. Preferably, the cutting means (5) are at a second pre-set and fixed distance from the movable structure (2) as it moves over the first movement line. This distance is typically of at least 3 mm.

The cutting plane is a plane oblique to the gravitational axis, along which the movable structure (2) moves. In order to gauge such a reference, a base supporting the said cutter elements (1), arranged perpendicularly to the gravitational axis, is considered. The movable structure (2) is also arranged obliquely to the gravitational axis in the same extent as the cutting plane. This allows that, when a whole piece of food is placed into the movable structure (2), in particular at its base, it slides under the effect of gravity by virtue of the fact that the movable structure (2) is itself arranged obliquely to the gravitational axis, to the same extent as the cutting plan. The references to the gravitational axis are therefore intended to refer to a vertical reference.

In an advantageous embodiment of the cutter (1) of the present invention, it further comprises inversion locking means configured to prevent the direction of movement of the movable structure (2) from being inverted after it overcomes the point of the first movement line intersecting the cutting means (5). This complements and improves the aforementioned functionality, requiring unidirectionality, since an operator does not have the possibility to retreat in the movement of the movable structure (2), which is limited to one single direction. Therefore, when the cutting position of the whole piece of food is exceeded, the only possibility is to continue with the movement up to the second pre-set distance, further away from the cutting means (5), thus making it impossible for the piece to come into contact with the cutting means (5) before, of course, continuing to traverse the closed circuit and finding said cutting means (5) in the most suitable position for a clean cut.

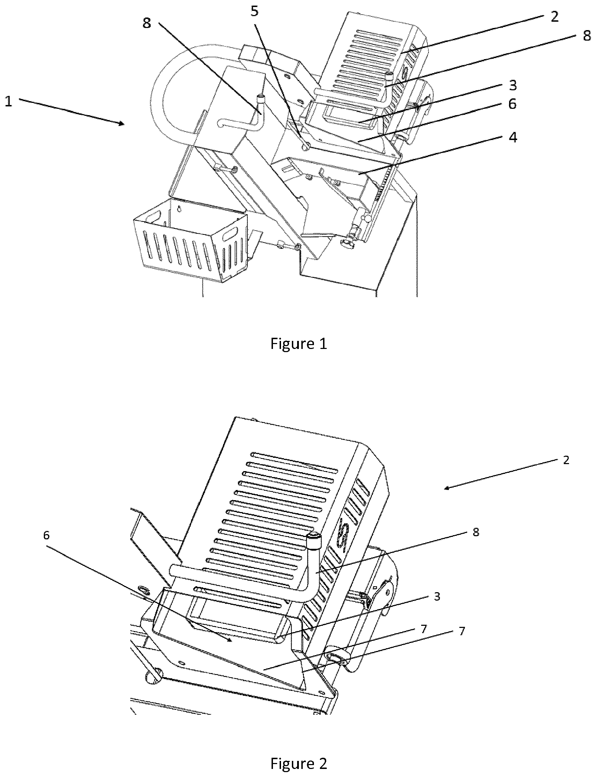

In another embodiment of the cutter (1) of the present invention, which is susceptible of being combined with any of the previously described ones, the said base of the movable structure (2) comprises two surfaces joined and transverse to each other (7), preferably perpendicular to each other, both obliquely disposed to the cutting plane and forming the opening (6) in such a way that when the whole piece of food is positioned on said surfaces (7) it encounters a point of lesser potential energy, abutting against the stopper (4) and being exposed to said cutting means (5). The said surfaces joined and transverse to each other (7) are arranged obliquely to the cutting plane along a longitudinal axis, as shown in Figure 1.

This allows the piece to find - by means of the said configuration of the base on which it is positioned - a point of lesser potential energy without requiring a more careful positioning by the operator, which could lead to the need for operation of the base and consequently to an interaction with the equipment during cutting. Figure 1 shows how the present specific configuration provides for less need for machine operation and, consequently, greater safety to the operator.

In another advantageous embodiment of the cutter (1), the said confining means (3) of the whole piece of food consist of a movable gripper (3) configured to move between an opening position (6) in which it is further away from the base of the movable structure (2) and a closing position in which it is closer to the base of the movable structure (2), its configuration being preferably in the closing position such that it approaches the base of the movable structure (2) until the force of any obstacle it encounters is greater than a pre-set limit.

This also ensures a greater automatism and less need of interaction by an operator, consequently with increased security. The movable gripper (3) ensures that the equipment secures the whole piece of food without the operator being required to hold the piece, possibly handling it in the vicinity of the cutting means (5), a situation which typically leads to accidents.

In an advantageous embodiment of the one described immediately above, comprising a movable gripper (3), it is configured to automatically move from the closing position to the opening position (6) when the movable structure (2) finishes traversing the second movement line, and to automatically move from the opening position (6) to the closing position when the movable structure (2) begins to traverse the first movement line.

This enables the cutter (1) of the present invention to operate semi-automatically, without the need for the operator - at any stage - to move the whole piece of food from a first position in which it cannot be cut by the cutting means (5) to a second position where this may occur. The movable gripper (3) and its operation, along with the oblique arrangement of the base of the movable structure (2) in relation to the gravitational axis, cause the whole piece of food to move under the effect of gravity until the stopper (4) is encountered, when not being pressed by the movable gripper (3). This occurs at the end of the closed circuit, i.e. when the second line of movement has just been traversed. This is an improved embodiment in what concerns the operator's safety.

In another advantageous embodiment of the cutter (1) of the present invention, which is susceptible of being combined with any of the previously described ones, it comprises handling means, consisting of two handles (8) that are suitable for actuation by an operator:
- a first handle (8) integral with an inertial structure supporting the cutting means (5) and
- a second handle (8) integral with the movable structure (2).

This enables an operator to move the movable structure (2) towards the cutting means (5) with greater ease and safety, since on the one hand the operator is able to move the whole piece of food - by means of the second handle (8) - without the need to contact with the said piece and, on the other hand, can be supported on the first handle (8) which is integral with the cutting means (5) and with an inertial structure, therefore not moving.

In another advantageous embodiment of the one described immediately above, comprising the first and second handles (8), the latter comprise detection means for detecting the interaction with the operator's hands, and the cutter (1) additionally comprises a locking element which is configured to stop the operation of the cutting means (5) whenever at least the said two detection means do not simultaneously detect an interaction with the hands of an operator, i.e., when there is not a simultaneous detection on both handles (8).

This confers an even greater degree of safety to the cutter (1) of the present invention, since the cutting means (5) do not operate - hence no accident can occur - if the operator is not interacting with both of the handles (8). So, this inherently prevents the operator from being able, at the same moment, to position either hand in the vicinity of the cutting means (5).

In a preferred embodiment of the cutter (1) of the present invention, which is susceptible of being combined with any of the foregoing, the cutter (1) consists of a saw, the cutting means (5) consisting of a band saw (5). As previously mentioned, the saw blade is also positioned perpendicular to the cutting plane.

It is also an object of the present invention the use of the cutter (1) as described above or subsequently in cutting slices of a whole piece of food consisting of a piece of meat, a fish or a piece of fish, or of a piece of meat, fish or vegetable derivatives.

### DESCRIPTION OF THE FIGURES

Figure 1 - a perspective view representing an embodiment of the cutter (1) of this invention, specifically comprising a saw blade (the cutting means (5) consist of a band saw), a closed movable structure (2) being visible, with an opening (6) and a base, the said base comprising two joined and transverse surfaces. The cutting plane (and the movable structure (2)) makes an angle of about 45° with the gravitational axis. The stopper (4) comprises adjusting means for the pre-set portion, which separate the stopper (4) from the cutting means (5). Also visible are the two handles (8), one integral with a structure that accommodates the saw and another one integral with the movable structure (2). The confining means (3) consist of a movable gripper (3), which operates according to the above and below described principles.
Figure 2 - a detailed view representing the embodiment of the cutter (1) / saw blade of figure 1, showing the characteristics of the movable structure (2).

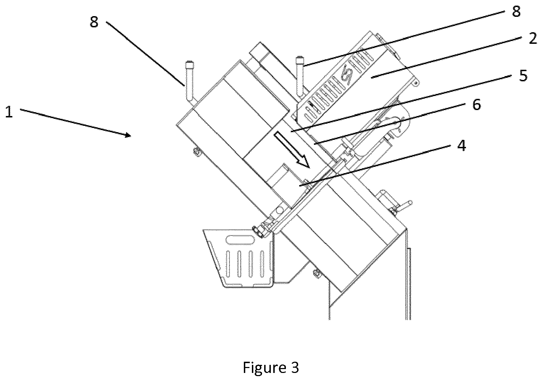

Figure 3 - a side view representing the embodiment of the Figure 1. This view clearly shows the embodiment in which the cutting plane - indicated by an arrow - and the movable structure (2) make an angle of about 45° with the gravitational axis.

### DETAILED DESCRIPTION OF THE INVENTION

The more general advantageous configurations of this invention are described in the Summary of the Invention. Such configurations are detailed below in accordance with other advantageous and/or preferred embodiments of this invention.

In a preferred embodiment of the cutter (1) of the present invention, it is configured for the first movement line and the second movement line to be semi-straight. Thus, the movement of the movable structure (2) forms a line - the first movement line - in which it encounters the cutting means (5), and consequently cuts a part of the whole piece of food. In both the first movement line and the second movement line, the respective distances to the cutting means are maintained.

In a preferred embodiment of the one immediately above described, the closed circuit of the cutting plane according to which the movable structure (2) is configured to move, forms a rectangular shape comprising i) two larger sides corresponding to the first movement line and the second movement line and ii) two smaller sides whose length corresponds to the distance between the said two lines of movement. Thus, after completion of the movement both along the first and the second movement lines, the movable structure (2) moves in the closest path between the two (one straight line) and the closed circuit thus forms a rectangular shape.

In a specific and preferred implementation of the immediately above described embodiment, the cutter (1) further comprises a platform on which the movable structure (2) is supported and on which it can be moved according to the cutting plane, which preferably comprises at least one cylinder and two guides suitable for displacing the assembly of said platform and the movable structure (2) between the first movement line and the second movement line. This is a specific implementation of the more general embodiment of the present invention, wherein the movable structure (2) moves away from the cutting means (5) and from the stopper (4) to the second pre-set distance.

In a specific and preferred implementation of the embodiment immediately above described, the movable structure (2) of the cutter (1) is supported on said platform by means of at least one wheel, preferably two, and the said platform comprises a steering axis parallel to the first movement line and to the second movement line, to which the movable structure (2) is coupled. This ensures a smooth and easy displacement of the movable structure (2) along the first and second movement lines.

In another specific configuration of the cutter (1) of the present invention, which is susceptible of being combined with any of the previously described ones, at least one of the said two surfaces joined and transverse to each other (7):
- is flat or contains a plurality of protrusions on at least part of its surface and/or
- a limit thereof arranged relative to the stopper (4) and adjacent to the opening (6) comprises a ramp suitable for increasing the friction with the whole piece of food.

In the case of a movable structure (2), any of the said surfaces (7) containing a plurality of protrusions is aimed at reducing the surface of contact with the whole piece of food - due to the protrusions - and thus decrease the friction with the piece, this being particularly useful for fresh fish, in which case there is greater friction to said surfaces (7).

On the other hand, the said ramp is intended to increase the friction with said surfaces (7), this being particularly useful for frozen fish.

In a preferred embodiment of the present invention, susceptible of being combined with any of the previously described ones, the movable structure (2) forms a closed space, comprising the confining area, the base and the opening (6), comprising a second opening opposite the former opening (6), which is suitable for the user to hold the whole piece of food. Such second opening is shown in Figures 1 e 2.

In another preferred embodiment of the present invention, susceptible of being combined with any of the previously described ones, the cutting plane arranged obliquely to the gravitational axis according to which the movable structure (2) is configured to move, makes an angle with the gravitational axis of 40-50°, preferably 45°.

In another preferred embodiment of the present invention, susceptible of being combined with any of the previously described ones, the stopper (4) comprises adjusting means such that their first pre-set distance from the said opening (6) of the confining area is adjustable. This makes it possible to better adapt to the type of food piece to be cut, for example by adjusting the slices of fish to be chopped depending on whether they are suitable for frying - thinner, with a shorter first pre-set distance - or for cooking - thicker, with a longer pre-set distance.

In a specific configuration of the cutter (1) of this invention, the said movable gripper (3) contains at least one irregular, preferably toothed face, arranged such that it faces the base of the movable frame (2). Preferably, the movable gripper (3) comprises two toothed faces arranged parallel to the base of the movable structure (2).

In a specific embodiment of the cutter (1) of the present invention, the means for detecting the interaction with the hands of an operator consist of at least two pressure sensors, each of the handles (8) having at least one pressure sensor. Thus, the operator will have to press both sensors of both handles (8) simultaneously; an action for which both hands will have to be used in order to the cutter (1) to be started and to the cutting means (5) to operate. Otherwise, and as previously explained, the cutting means (5) will not operate, which will prevent the cutter (1) from cutting. This prevents the operator from placing his hands in the vicinity of the cutting means (5) during the operation of the cutter (1), thus increasing its safety.

In another preferred embodiment, the cutter (1) is supported on a preferably rectangular main base, which in its turn preferably comprises four feet for placement on the floor, preferably of adjustable height. This main base is positioned substantially perpendicular to the gravitational axis.

In another preferred embodiment, in a position adjacent to the cutting means (5), the stopper (4) undergoes a deflection moving away from the cutting means (5) and the movable structure (2), the cutter (1) further comprising a basket adjacent to said deflection, both being positioned such that, when a whole piece of food is cut and thus a portion is dissociated from the whole piece of food, that portion falls under the effect of gravity encountering the deflection of the stopper (4) which directs it to the said basket, where the operator may for example place a bag, which will join all cut portions.

The operation of the cutter (1) of the present invention is described below with reference to a specific embodiment in which the cutter (1) consists in a saw blade, the cutting means (5) consisting in a band saw (5). The operator places a whole piece of food, such as a frozen fish, in the base of the movable structure (2), the said base comprising two surfaces transversely to each other (7), specifically perpendicular to each other, arranged obliquely in relation to the cutting plane, such as defined above. These surfaces form a "V". The frozen fish, when placed under said joined surfaces (7), is in a position of lesser potential energy being longitudinally arranged along said V and abutting against the stopper (4), since the movable structure (2) is arranged obliquely to the gravitational axis, whereby the frozen fish slides until it encounters the stopper (4). The stopper (4) is at a distance from the movable structure (2) which corresponds to the sum of the pre-set portion with the distance between the band saw (5) and the movable structure (2). The operator, by using the adjusting means of the stopper (4), can adjust the pre-set portion, thereby adjusting the thickness of the frozen fish slice to be cut. The movable gripper (3) is in an open position, therefore without pressing the frozen fish. The band saw is not in operation since the operator has not yet pressed the pressure sensors on the handles (8). It shall be stressed once again that a handle (8) is integral with a structure supporting the band saw (5) and another handle (8) is integral with the movable structure (2), thereby moving along with it on the closed circuit when the equipment is started. The cutter (1) is now ready to start cutting.

When the operator presses the pressure sensors of both handles (8), the band saw (5) is actuated, the movable gripper (3) presses the frozen fish and the operator is able to push the handle (8) which is integral with the frame (2) along the first movement line. Along this line, the frozen fish is pressed by the movable gripper (3) and abuts against the stopper (4). From the point of the first movement line, which intersects the band saw (5), the movement is unidirectional, and so the operator cannot reverse the direction of movement of the moveable structure (2), thus passing again through the band saw (5). Therefore, when it encounters the band saw (5), it cuts a slice of the frozen fish corresponding to the pre-set portion, the movable structure (2) then reaching the end of the first movement line, at which point the cylinder comes into action, displacing the movable structure (2) to the second movement line, which is further away from the band saw (5). Continuing to operate the saw blade, the operator pulls the movable structure (2) towards him, along the second movement line. When moving along the first and the second movement lines, the movable structure (2) is guided by its coupling to a parallel steering axis, being supported by means of two wheels on a platform.

At the end of the second movement line, the cylinder acts again by displacing the movable structure (2) back to the first movement line, and the movable gripper (3) automatically moves into its open position - not pressing the frozen fish - whereby the cut piece of frozen fish moves under the effect of gravity until encountering the stopper (4).

As the movable structure (2) is again pushed through the handle (8) which is integral with it, the process is restarted and can be repeated until the desired number of frozen fish slices is cut or, if it is not possible to cut more slices, when the remaining frozen piece of fish is less than the pre-set portion.

As will be apparent to a person skilled in the art, the present invention shall not be limited to the embodiments described herein, and a number of changes are possible which remain within the scope of this invention.

Of course, the preferred embodiments shown above are susceptible of being combined in the different possible forms, the repetition of all such combinations being herein avoided.

## Claims

1. A cutter (1) for a whole piece of food comprising cutting means (5), a movable structure (2) suitable for positioning the whole piece of food and a stopper (4) arranged in such a way as to support the whole piece of food when positioned on said movable structure (2) wherein:
- the movable structure (2) comprises a confining area which is suitable for securing the whole piece of food with:
i. a base,
ii. an opening (6) through which a section of the whole piece of food, when positioned in the said base, is exposed to the said cutting means (5) and
iii. confining means (3) of the whole piece of food,
being configured to move along a cutting plane arranged obliquely to the gravitational axis and consisting of a closed circuit including:
i. a first movement line including a point at which the movable structure (2) is adjacent to the cutting means (5) and
ii. a second movement line including a point at which the movable structure (2) is at a pre-set distance further from the cutting means (5),
- the stopper (4) being:
i. spaced apart by a predefined portion of the said cutting means (5) and
ii. arranged substantially perpendicular to the cutting plane and along the movement line to the cutting means (5),
such that when the whole piece of food is positioned in the confining area of the movable structure (2) through the said opening (6), it abuts against the stopper (4);
- the cutting means (5) being arranged:
i. substantially perpendicular to the said cutting plane, intersecting it, and
ii. in such a way that when the whole piece of food is positioned in the said base of the movable structure (2) against the stopper (4) and the movable structure (2) is moved along the first movement line, the whole piece of food is cut to the extent of the said pre-set portion.

2. A cutter (1) according to the previous claim, **characterized in that** the movable structure (2) also comprises inversion locking means configured to prevent the direction of movement of the movable structure (2) from being inverted after it has passed the point of the first line which intersects the cutting means (5).

3. A cutter (1) according to any one of the preceding claims, **characterized in that** it is configured for the first movement line and the second movement line to be semi-straight.

4. A cutter (1) according to the previous claim, **characterized in that** the closed circuit of the cutting plane according to which the movable structure (2) is configured to move, forms a rectangular figure comprising i) two larger sides corresponding to the first line of movement and the second line of movement and ii) two smaller sides whose length corresponds to the distance between the said two lines of movement.

5. A cutter (1) according to the previous claim, **characterized in that** it further comprises a platform on which the movable structure (2) is supported and on which it can be displaced according to the cutting plane, which preferably comprises at least one cylinder and two guides suitable for moving the assembly of the said platform and the movable structure (2) between the first movement line and the second movement line and, optionally, the movable structure (2) being supported on said platform by means of at least one wheel and said platform comprising a steering axis parallel to the first movement line and the second movement line, to which the movable structure (2) is coupled.

6. A cutter (1) according to any one of the previous claims, **characterized in that** the said base of the movable structure (2) comprises two surfaces joined and transverse to each other (7), preferably perpendicular to each other, both obliquely arranged to the cutting plane and forming the opening (6) in such a way that when the whole piece of food is positioned on said surfaces (7) it encounters a point of lesser potential energy, abutting against the stopper (4) and being exposed to the said cutting means (5).

7. A cutter (1) according to the previous claim, **characterized in that** at least one of the said two surfaces joined and transverse to each other (7):
- is flat or contains a plurality of protrusions on at least part of its surface and/or
- a limit thereof arranged relative to the stopper (4) and adjacent to the opening (6) comprises a ramp suitable for increasing the friction with the whole piece of food.

8. A cutter (1) according to any one of the preceding claims, **characterized in that** the movable structure (2) forms a closed space, comprising the confining area, the base and the opening (6), comprising a second opening opposite to the former opening (6).

9. A cutter (1) according to any one of the previous claims **characterized in that** the cutting plane arranged obliquely to the gravitational axis according to which the movable structure (2) is configured to move, makes an angle with the gravitational axis of 40-50°, preferably 45°.

10. A cutter (1) according to any one of the previous claims **characterized in that** the stopper (4) comprises adjusting means wherein the first pre-set distance from the said opening (6) of the confining area is adjustable.

11. A cutter (1) according to any one of the previous claims **characterized in that** the said confining means (3) of the whole piece of food consist of a movable gripper (3) configured to move between an opening position (6) in which it is further away from the base of the movable structure (2) and a closing position in which it is closer to the base of the movable structure (2), its configuration being preferably in such closed position that it approaches the base of the movable structure (2) until the force of any obstacle it encounters is greater than a pre-set limit.

12. A cutter (1) according to the previous claim, **characterized in that** the movable gripper (3) is configured to automatically move from the closing position to the opening position (6) when the movable structure (2) finishes traversing the second movement line, and to automatically move from the opening position (6) to the closing position when the movable structure (2) begins to traverse the first movement line and, optionally, the said movable gripper (3) contains at least one irregular, preferably toothed face, arranged in such a way that it faces the base of the movable frame (2).

13. A cutter (1) according to any one of the previous claims **characterized in that** it comprises handling means, consisting of two handles (8) that are suitable for actuation by an operator:
- a first handle (8) integral with an inertial structure supporting the cutting means (5) and
- a second handle (8) integral with the movable structure (2) and, optionally, the said first and second handles (8) comprise detection means for detecting the interaction with the operator's hands, and the cutter (1) additionally comprising a locking element which is configured to stop the operation of the cutting means (5) whenever at least one of the said two detection means does not detect an interaction with the operator's hands.

14. A cutter (1) according to any one of the previous claims **characterized in that** it consists in a saw blade, the cuttings means (5) consisting of a band saw (5).

15. Use of the cutter (1) according to any one of the previous claims for cutting slices of a whole piece of food consisting of a piece of meat, a fish or a piece of fish, or a piece of a fish, meat or vegetable derivative.

## Patentansprüche

1. Ein Schneider (1) für ein ganzes Stück Lebensmittel, welches Schneidemittel (5), eine bewegbare Struktur (2), geeignet, um das ganze Stück Lebensmittel zu platzieren und einen Stopper, auf solche Weise arrangiert, dass es das ganze Stück Lebensmittel stützt, wenn dieses auf der besagten bewegbaren Struktur (2) platziert ist, umfasst, worin:
- die bewegbare Struktur (2) einen begrenzten Bereich umfasst, der geeignet ist, um das ganze Stück Lebensmittel zu befestigen mit:
i. einer Basis,
ii. einer Öffnung (6), durch die eine Portion des ganzen Stück Lebensmittel, wenn in der besagten Basis platziert, den besagten Schneidemitteln (5) ausgesetzt ist und
iii. Beschränkungsmitteln (3) des ganzen Stück Lebensmittel,
eingerichtet, um sich entlang einer Schnittebene zu bewegen, quer zur Gravitationsachse angeordnet und aus einem geschlossenem Kreis bestehend, welcher folgendes einschließt:
i. eine erste Bewegungslinie, welche eine Stelle einschließt, an der die bewegbare Struktur (2) mit den Schneidemitteln (5) aneinandergrenzt und
ii. eine zweite Bewegungslinie, welche eine Stelle einschließt, an der die bewegbare Struktur (2) zu einer vorher festgesetzten Entfernung weiter von den Schneidemitteln (5) ist,
- der Stopper (4) ist:
i. durch einen vordefinierten Teil des besagten Schneidemittels (5) räumlich getrennt,
ii. wesentlich senkrecht zu der Schnittebene und entlang der Bewegungslinie zu den Schneidemitteln (5) angeordnet,
sodass, wenn das ganze Stück Lebensmittel in dem begrenzten Bereich der bewegbaren Struktur (2) durch die besagte Öffnung (6) platziert wird, stoßt es an den Stopper(4);
- die Schneidemittel (5) sind so arrangiert:
i. wesentlich senkrecht zu der besagten Schnittebene, indem es diese überkreuzt, und
ii. sodass, wenn das ganze Stück Lebensmittel in der besagten Basis der bewegbaren Struktur (2) gegen den Stopper (4) platziert wird und die bewegbare Struktur (2) entlang der ersten Bewegungslinie bewegt wird, wird das ganze Stück Lebensmittel mit der Größe des vordefinierten Teils geschnitten.

2. Ein Schneider (1) nach dem vorherigen Anspruch, **dadurch gekennzeichnet, dass** die bewegbare Struktur (2) auch umgekehrte Verriegelungsmittel umfasst, die eingerichtet sind, um zu verhindern, dass die Bewegungsrichtung der bewegbaren Struktur (2) nachdem diese die Stelle der ersten Linie passiert, welche sich mit den Schneidemitteln (5) überkreuzt, invertiert wird.

3. Ein Schneider (1) nach jedem der vorherigen Ansprüche, **dadurch gekennzeichnet, dass** dieser so eingerichtet ist, dass die erste Bewegungslinie und die zweite Bewegungslinie halb-gerade sind.

4. Ein Schneider (1) nach dem vorherigen Anspruch, **dadurch gekennzeichnet, dass** der geschlossene Kreis der Schnittebene, durch den die bewegbare Struktur (2) sich bewegen soll, eine rechteckige Gestalt bildet, welche i) zwei größere Seiten, die mit der ersten Bewegungslinie und der zweiten Bewegungslinie übereinstimmen, und ii) zwei kleinere Seiten, dessen Länge mit dem Abstand zwischen den zwei besagten Bewegungslinien übereinstimmt, umfasst.

5. Ein Schneider (1) nach dem vorherigen Anspruch, **dadurch gekennzeichnet, dass** dieser weiterhin eine Plattform, auf der die bewegbare Struktur (2) gestützt ist, umfasst und auf welcher diese nach der Schnittebene verschoben werden kann, welche vorzugsweise mindestens einen Zylinder und zwei Führungen umfasst, die geeignet sind, um die Anordnung der besagten Plattform und die bewegbare Struktur (2) zwischen der ersten Bewegungslinie und der zweiten Bewegungslinie zu bewegen, und, gegebenfalls die bewegbare Struktur (2) auf der besagten Plattform mittels mindestens ein Rad gestützt ist und die besagte Plattform eine Lenkachse, die zu der ersten Bewegungslinie und der zweiten Bewegungslinie parallel ist, umfasst, an welche die bewegbare Struktur (2) gekoppelt ist.

6. Ein Schneider (1) nach jedem der vorherigen Ansprüche, **dadurch gekennzeichnet, dass** die besagte Basis der bewegbaren Struktur (2) zwei kombinierte Oberflächen (7), die schräg zueinander sind, umfasst, vorzugsweise senkrecht zueinander, beide sind schräg zu der Schnittebene angeordnet und bilden so die Öffnung (6), dass, wenn das ganze Stück Lebensmittel auf den besagten Oberflächen (7) platziert ist, es eine Stelle von geringerer potenzieller Energie findet, und gegen den Stopper(4) stoßt und den besagten Schneidemitteln (5) ausgesetzt ist.

7. Ein Schneider (1) nach dem vorherigen Anspruch, **dadurch gekennzeichnet, dass** mindestens eine der besagten zwei kombinierten Oberflächen (7), die schräg zueinander sind:
- flach ist und eine Vielzahl von Vorsprüngen auf mindestens einem Teil dessen Oberfläche enthält und/oder
- eine Grenze davon bezüglich dem Stopper (4) angeordnet und zu der Öffnung (6) benachbart ist, eine Rampe umfasst, die geeignet ist, um die Reibungskraft mit dem ganzen Stück Lebensmittel zu verstärken.

8. Ein Schneider (1) nach jedem der vorherigen Ansprüche, **dadurch gekennzeichnet, dass** die bewegbare Struktur (2) einen geschlossenen Raum bildet, welcher den begrenzten Bereich, die Basis und die Öffnung (6) umfasst, eine zweite Öffnung gegenüber der vorherigen Öffnung (6) umfasst.

9. Ein Schneider (1) nach jedem der vorherigen Ansprüche, **dadurch gekennzeichnet, dass** die Schnittebene, die der Gravitationsachse schräg angeordnet ist, nach welcher die bewegbare Struktur (2) sich bewegen soll, einen Winkel von 40-50°, vorzugsweise 45° mit der Gravitationsachse bildet.

10. Ein Schneider (1) nach jedem der vorherigen Ansprüche, **dadurch gekennzeichnet, dass** der Stopper(4) Einstellungsmittel umfasst, worin die erste festgesetzte Entfernung von der besagten Öffnung (6) des begrenzten Bereichs, einstellbar ist.

11. Ein Schneider (1) nach jedem der vorherigen Ansprüche, **dadurch gekennzeichnet, dass** die besagten Beschränkungsmittel (3) des ganzen Stück Lebensmittel aus einem bewegbaren Greifer (3), der eingerichtet ist, um zwischen einer Öffnungsposition (6), in der dieser weiter entfernt von der Basis der bewegbaren Struktur (2) ist und einer Schließposition, in der dieser näher von der Basis der bewegbaren Struktur (2) ist, besteht, dessen Konfiguration ist vorzugsweise in solch einer Schließposition, dass es sich der Basis der bewegbaren Struktur (2) annähert, bis die Kraft jedes Hindernis, welches sie begegnet, stärker ist, als eine vorher festgesetzte Grenze.

12. Ein Schneider (1) nach dem vorherigen Anspruch, **dadurch gekennzeichnet, dass** der bewegbare Greifer (3) eingerichtet ist, um automatisch von der Schließposition zu der Öffnungsposition (6) zu wechseln, wenn die bewegbare Struktur (2) die zweite Bewegungslinie durchquert hat, und um automatisch von der Öffnungsposition (6) zu der Schließposition zu wechseln, wenn die bewegbare Struktur (2) beginnt die erste Bewegungslinie zu durchqueren und, gegebenfalls, der besagte bewegbare Greifer (3) mindestens eine unregelmäßige Oberfläche umfasst, vorzugsweise verzahnt, so angeordnet, dass es die Basis des bewegbaren Struktur (2) entgegensteht.

13. Ein Schneider (1) nach jedem der vorherigen Ansprüche, **dadurch gekennzeichnet, dass** er Handhabungsmittel umfasst, die aus zwei Griffen (8) bestehen, die für die Betätigung durch einen Bediener geeignet sind:
- ein erster Griff (8) ganzheitlich mit einer trägen Struktur, die die Schneidemittel (5) stützt und
- ein zweiter Griff (8) ganzheitlich mit der bewegbaren Struktur (2) und,
gegebenfalls, der besagte erste und zweite Griff (8) Erkennungsmittel umfassen, um die Interaktion mit der Hand des Betreibers zu erkennen, und der Schneider (1) zusätzlich ein Verriegelungselement umfasst, welches eingerichtet ist, um den Betrieb der Schneidemittel (5) zu stoppen, immer wenn mindestens eines der besagten zwei Erkennungsmittel die Interaktion mit der Hand des Betreibers nicht erkennt.

14. Ein Schneider (1) nach jedem der vorherigen Ansprüche, **dadurch gekennzeichnet, dass** er ein Sägeblatt ist, die Schneidemittel (5) bestehen aus einer Bandsäge (5).

15. Nutzung des Schneiders (1) nach jedem der vorherigen Ansprüche, um Scheiben des ganzes Stück Lebensmittel zu schneiden, welche aus einem Fleischstück, einem Fisch, oder einem Stück Fisch, oder einem Stück von einem Fisch, einem Fleisch - oder Gemüsederivat bestehen.

## Revendications

1. Machine à couper (1) une pièce entière d'aliment comprenant un outil de coupe (5), une structure mobile (2) apte à positionner la pièce entière d'aliment et un butoir (4) disposé de manière à supporter la pièce entière d'aliment lorsque ladite pièce est positionnée sur ladite structure mobile (2), dans laquelle:
- la structure mobile (2) comporte une zone de confinement qui est apte à retenir la pièce entière d'aliment avec:
i. une base,
ii. une ouverture (6) à travers laquelle une section de la pièce entière d'aliment, lors de son positionnement sur ladite base, est exposée audit outil de coupe (5) et
iii. des moyens de confinement (3) de la pièce entière d'aliment,
configurée pour se déplacer au long d'un plan de coupure disposé de façon oblique à l'axe gravitationnel et consistant en un circuit fermé comprenant:
i. Une première ligne de mouvement comprenant un point auquel la structure mobile (2) est adjacente à l'outil de coupe (5) et
ii. une seconde ligne de mouvement comprenant un point auquel la structure mobile (2) se trouve à une distance prédéterminée, éloignée de l'outil de coupe (5)
- le butoir (4) étant:
i. Eloigné par une portion, préalablement définie, dudit outil de coupe (5) et
ii. disposé de manière substantiellement perpendiculaire au plan de coupe et au long de la ligne de mouvement de l'outil de coupe (5),
de façon à ce que, quand la pièce entière d'aliment est positionnée dans la zone de confinement de la structure mobile (2), à travers de ladite ouverture (5), ladite pièce bute contre le butoir (4);
- l'outil de coupe (5) étant disposé comme suit:
i. Substantiellement perpendiculaire audit plan de coupe, le croisant, et
ii. de façon à ce que, quand la pièce entière d'aliment est positionnée sur ladite base de la structure mobile (2) contre le butoir (4) et la structure mobile (2) est déplacée au long de la première ligne de mouvement, la pièce entière d'aliment est coupée dans la mesure de ladite portion prédéterminée.

2. Machine à couper (1) selon la revendication précédente, **caractérisée par le fait que** la structure mobile (2) comporte aussi des moyens d'inversion de verrouillage configurés pour éviter que la direction du mouvement de la structure mobile (2) soit inversée après avoir passé le point de la première ligne qui se croise avec l'outil de coupe (5) .

3. Machine à couper (1) selon quelqu'une des revendications précédentes, **caractérisée par le fait qu'**elle est configurée pour que la première ligne de mouvement et la seconde ligne de mouvement soient demi-droites.

4. Machine à couper (1) selon la revendication précédente, **caractérisée par le fait que** le circuit fermé du plan de coupe, selon lequel la structure mobile (2) est configurée pour se déplacer, forme une figure rectangulaire comprenant i) deux cotés plus larges qui correspondent à la première ligne de mouvement et à la seconde ligne de mouvement, et ii) deux cotés plus petits dont la longueur correspond à la distance entre lesdites deux lignes de mouvement.

5. Machine à couper (1) selon la revendication précédente, **caractérisée par le fait de** comporter encore une plateforme sur laquelle la structure mobile (2) est supportée et sur laquelle ladite structure peut être déplacée selon le plan de coupe, lequel comporte, préférablement, au moins un cylindre et deux guides aptes à déplacer l'ensemble de ladite plateforme et de la structure mobile (2) entre la première ligne de mouvement et la seconde ligne de mouvement, éventuellement, la structure mobile (2) étant supportée sur ladite plateforme au moyen d'au moins une roue et ladite plateforme comporte un axe de direction, parallèle à la première ligne de mouvement et à la seconde ligne de mouvement, auquel est couplée la structure mobile (2).

6. Machine à couper (1) selon quelqu'une des revendications précédentes, **caractérisée par le fait que** ladite base de la structure mobile (2) comporte deux surfaces jointes et transversales l'une à l'autre (7), préférablement perpendiculaires l'une à l'autre, toutes les deux étant disposées obliquement au plan de coupe et formant l'ouverture (6) de façon à ce que, quand la pièce entière d'aliment est positionnée sur lesdites surfaces (7) ladite pièce rencontre un point d'énergie potentielle inférieur, butant contre le butoir (4) et étant exposée audit outil de coupe (5).

7. Machine à couper (1) selon la revendication précédente, **caractérisée par le fait qu'au** moins une desdites deux surfaces jointes et transversales l'une à l'autre (7):
- est plane ou bien contient une pluralité de protrusions sur au moins une partie de sa surface et/ou
- un de ses limites, disposé en opposition au butoir (4) et adjacent à l'ouverture (6), comporte une rampe apte à augmenter la friction avec la pièce entière d'aliment.

8. Machine à couper (1) selon quelqu'une des revendications précédentes, **caractérisée par le fait que** la structure mobile (2) forme un espace fermé, comprenant la zone de confinement, la base et l'ouverture (6) comprenant une seconde ouverture opposée à la première ouverture (6).

9. Machine à couper (1) selon quelqu'une des revendications précédentes, **caractérisée par le fait que** le plan de coupe disposé obliquement à l'axe gravitationnel, selon lequel la structure mobile (2) est configurée pour se déplacer, forme un angle avec l'axe gravitationnel de 40-50°, préférablement 45°.

10. Machine à couper (1) selon quelqu'une des revendications précédentes, **caractérisée par le fait que** le butoir (4) comporte des moyens de réglage par lesquels la première distance prédéterminée, depuis ladite ouverture (6) de la zone de confinement, est réglable.

11. Machine à couper (1) selon quelqu'une des revendications précédentes, **caractérisée par le fait que** lesdits moyens de confinement (3) de la pièce entière d'aliment sont composés par une pince mobile (3) configurée pour se déplacer entre une position d'ouverture (6) dans laquelle ladite pince s'éloigne encore plus de la base de la structure mobile (2) et une position de fermeture dans laquelle ladite pince est plus proche de la base de la structure mobile (2), sa configuration étant préférablement dans une telle position de fermeture qui rends possible l'approximation de la base de la structure mobile (2) jusqu'à ce que la force d'un quelconque obstacle sur son chemin soit supérieure à une limite prédéterminée.

12. Machine à couper (1) selon la revendication précédente, **caractérisée par le fait que** la pince mobile (3) est configurée pour se déplacer automatiquement depuis la position de fermeture jusqu'à la position d'ouverture (6) quand la structure mobile (2) termine de traverser la seconde ligne de mouvement et, pour se déplacer automatiquement depuis la position d'ouverture (6) jusqu'à la position de fermeture, quand la structure mobile (2) commence à traverser la première ligne de mouvement et, éventuellement, ladite pince mobile (3) contient au moins une face irrégulière, préférablement dentée, disposée de façon à faire face à la base de la structure mobile (2).

13. Machine à couper (1) selon quelqu'une des revendications précédentes, **caractérisée par le fait de** comporter des moyens de manipulation, consistant en deux poignées (8) qui sont aptes à être actionnées par un opérateur:
- une première poignée (8) intégrale avec une structure inertielle qui supporte l'outil de coupe (5) et
- une seconde poignée (8) intégrale avec la structure mobile (2) et,
éventuellement, lesdites première et seconde poignées (8) comportent des moyens de détection pour détecter l'interaction avec les mains de l'opérateur, et la machine à couper (1) comporte, en plus, un élément de verrouillage qui est configuré pour interrompre l'opération de l'outil de coupe (5) chaque fois qu'au moins un desdits deux moyens de détection ne détectent une interaction avec les mains de l'opérateur.

14. Machine à couper (1) selon quelqu'une des revendications précédentes, **caractérisée par le fait qu'**elle consiste en une lame de scie, l'outil de coupe (5) consistant en une lame de scie (5).

15. Utilisation de la machine à couper (1) selon quelqu'une des revendications précédentes pour couper des tranches d'une pièce entière d'aliment consistant en une pièce de viande, un poisson ou une pièce de poisson, ou une pièce d'un poisson, de viande ou d'un dérivé végétal.
